# EUROPÄISCHE PATENTANMELDUNG

(11) **EP 3 333 020 A1**
(43) Veröffentlichungstag der Anmeldung: **13.06.2018**
(21) Anmeldenummer: 17204845.6
(22) Anmeldetag: 01.12.2017
(51) Int. Cl.: B60R 1/074, B60R 1/076

(54) **AUSSENSPIEGELANORDNUNG FÜR KRAFTFAHRZEUGE, ADAPTER FÜR EINE AUSSENSPIEGELANORDNUNG, SOWIE VERFAHREN ZUR MONTAGE EINER AUSSENSPIEGELANORDNUNG**

(30) Priorität: 09.12.2016 DE 102016224649
(71) Anmelder: Magna Mirrors Holding GmbH, 63877 Sailauf (DE)
(72) Erfinder: MÜLLER, Martin, 97980 Bad Mergentheim (DE)
(74) Vertreter: Völger, Silke Beatrix

(57) **Zusammenfassung**

Die Erfindung betrifft eine Außenspiegelanordnung für Kraftfahrzeuge mit einem an der Fahrzeugkarosserie festlegbaren Spiegelfuß (1) und einem ein Spiegelglasträgerelement (2) umfassenden Spiegelkopf, wobei zwischen Spiegelfuß (1) und Spiegelkopf eine Gelenkverbindung vorgesehen ist, die eine schwenkbare Lagerung zwischen Spiegelfuß (1) und Spiegelkopf um eine Gelenkachse (A) ermöglicht, wobei die Gelenkverbindung eine Abklappeinrichtung umfasst, wobei diese eine spiegelfußseitige Rastscheibe mit Rastelementen (4, 5) und eine spiegelkopfseitige Rastscheibe (10) mit Rastelementen (7, 8) aufweist, und wobei durch Schlag auf den Spiegelkopf ein Verschwenken des Spiegelkopfes unter Auslösung der Abklappeinrichtung ermöglicht wird, wobei das Spiegelglasträgerelement (2) mit zumindest einer Gehäuseausnehmung (12, 13) zur Aufnahme eines Baugruppenmoduls eines elektrischen Beiklappantriebs ausgebildet ist. Diese Außenspiegelanordnung soll derart weitergebildet werden, dass die Herstellkosten und die Fertigungszeiten minimiert und wobei insbesondere die Teilevielfalt der Spiegelglasträger gering sein soll. Dies wird dadurch erreicht, dass die Außenspiegelanordnung einen Rastadapter (3) umfasst, der zumindest einen Grundkörper (31, 32) aufweist, der an die Gehäuseausnehmung (12, 13) angepasst und anstelle des Baugruppenmoduls dort eingefügt ist, und wobei die spiegelkopfseitige Rastscheibe (10) an dem Rastadapter (3) ausgebildet ist.

## Beschreibung

Die vorliegende Erfindung betrifft eine Außenspiegelanordnung für Kraftfahrzeuge, einen Adapter für eine Außenspiegelanordnung sowie ein Verfahren zur Montage einer Außenspiegelanordnung.

Fahrzeugaußenspiegel bestehen im Wesentlichen aus einem Spiegelkopf, in dem das Spiegelglas auf einem Spiegelglasträgerelement gehalten ist, sowie einem Spiegelfuß, der eine Anbindung an die Fahrzeugkarosserie ermöglicht. Der Spiegelfuß und das Spiegelglasträgerelement sind dabei um eine annähernd vertikale Achse schwenkbar miteinander verbunden und mittels einer Abklappvorrichtung gekoppelt. Die gelenkige Anbindung und Kopplung dieser Teile ermöglicht ein Abklappen des Spiegelgehäuses bei Überschreiten einer bestimmten auf den Spiegelkopf einwirkenden Kraft sowohl in Fahrtrichtung als auch entgegen der Fahrtrichtung. Dieses Abklappen ist eine Voraussetzung für die Zulassung von Kraftfahrzeugen, um die Verkehrssicherheit von anderen Verkehrsteilnehmern bei einem Verkehrsunfall vor Verletzungen zu schützen oder deren Ausmaß oder Folgen zu mildern.

Ein Fahrzeugaußenspiegel, der mit einer gesetzlich vorgeschriebenen Abklappfunktion ausgeführt ist, ist aus der EP 1 170 175 A2 bekannt. Hierbei ist die Lage des Spiegelglasträgerelementes relativ zum Spiegelfuß in einem definierten Schwenkwinkel durch Einrasten von Rastelementen in eine Rastkontur sicherbar. Das Spiegelglasträgerelement ist bei eingerastetem erstem Rastelement gegen den Druck eines Federelementes so weit in Richtung der Schwenkachse verlagerbar, dass das zweite Rastelement durch Verschwenken des Spiegelglasträgers aus der zweiten Rastkontur ausrastbar ist.

Weiterhin ist es mittlerweile bei einer Vielzahl von Fahrzeugmodellen aufgrund der zunehmenden Breite von Fahrzeugtypen üblich, dass die Fahrzeugaußenspiegel zusätzlich mit einem sogenannten elektrischen Beiklappantrieb ausgestattet sind, wodurch ein Anklappen des Fahrzeugaußenspiegels in eine Parkposition auf Befehl des Fahrers durch den elektrischen Beiklappantrieb erfolgt.

Ein Fahrzeugaußenspiegel mit mechanisch ausgebildeter Abklappfunktion und zusätzlich integriertem elektrischem Beiklappantrieb ist aus der EP 0748 719 A2 bekannt. Die gelenkige Verbindung zwischen Spiegelfuß und Spiegelglasträgerelement wird über einen spiegelfußfesten Lagerzapfen sowie eine als Hülse ausgebildete Lagerbuchse ausgebildet. Die Lagerbuchse ist hierbei über eine Feder koaxial auf den Lagerzapfen aufgedrückt. Die als Spiraldruckfeder ausgebildete Feder stützt sich dabei einerseits auf einem ringförmigen Stützflansch der Hülse ab und andererseits liegt das gegenüberliegende Ende der Feder über eine Zwischenscheibe an einer Arretierplatte an. Die Arretierplatte wird nach dem Einsetzen der Druckfeder und der Zwischenscheibe an der mit dem Spiegelglasträgerelement in Verbindung stehenden Lagerbuchse fixiert. In einer zum Spiegelfuß weisenden Kammer der Hülse ist eine Rastscheibe gelagert, die als Rastelement eine im Querschnitt keilförmige, sich radial erstreckende Ausnehmung aufweist. Dieser Ausnehmung ist als korrespondierendes Rastelement eine spiegelfußseitig angeordnete Rippe zugeordnet. Zur elektrischen Verstellung des Spiegelkopfes in Bezug auf den Spiegelfuß ist in einem Gehäuseabschnitt des Spiegelglasträgerelementes der Beiklappantrieb angeordnet. Dieser umfasst einen Motor und ein Getriebe mit einem Abtriebselement. Das als Getriebeschnecke ausgeführte Abtriebselement greift in einen mit einer Verzahnung versehenen Abschnitt der Rastscheibe ein. Bei Ausüben eines Schlages auf den Spiegelkopf bei nicht aktiviertem Motor, wird aufgrund der Zwangskopplung der Rastscheibe mit der Getriebeschnecke ein axiales Anheben der Rastscheibe gegen die Wirkung der Druckfeder bis zur Befreiung des Rastelementes der Rastscheibe aus dem Eingriff mit dem Rastelement des Spiegelfußes bewirkt, wodurch der Spiegelkopf mit Rastscheibe dem Schlag durch Einklappen ausweichen kann. Bei einer elektrischen Verstellung des Spiegelkopfes in eine angeklappte Parkposition wird der Antriebsmotor durch ein Steuermodul beaufschlagt und ein die Getriebeschnecke dreht auf dem Zahnkranz der Rastscheibe. Die Rastscheibe ist dabei aufgrund der Wirkung der Druckfeder und der Rastverbindung zwischen Rastscheibe und Spiegelfuß relativ zum Spiegelfuß drehfest gehalten. Der Spiegelkopf mit Spiegelglasträgerelement und Hülse schwenkt somit in eine Parkposition entgegen der Fahrtrichtung zum Fahrzeug. Zur Schwenkwinkelbegrenzung sind entsprechende Anschläge vorgesehen.

Aus der DE 10 2010 054 037 A1 ist ebenfalls einen Außenspiegel in mechanischer und elektrischer Ausführung mit Beiklappfunktion bekannt. Bei der mechanischen Ausführung der Beiklappfunktion wird ein Gehäusestützglied mit Rastscheibe in den Spiegelkopf eingesetzt, die elektrische Variante setzt den Beiklappantrieb entweder direkt in eine Gehäuseausnehmung einer Gehäusehalbschale des Spiegelkopfs oder über ein Passstück in die Gehäusehalbschale ein.

Wie es obenstehend bereits geschildert ist, werden Außenspiegelanordnungen sowohl mit als auch ohne einen elektrischen Beiklappantrieb gebaut. Weiterhin müssen aufgrund länderspezifischer Vorgaben sowohl rechte als auch linksseitig ausgeführte Außenspiegelanordnungen für die Fahrerseite bzw. Beifahrerseite bereitgestellt werden. Alle oben genannten Außenspiegelanordnungen sind mit entsprechend angepassten Spiegelglasträgerelementen ausgeführt, was zu einer Bereitstellung einer großen Teilevielfalt führt. Für die Fertigung der Spiegelglasträgerelemente sind dementsprechend viele unterschiedliche Werkzeuge bzw. Wechseleinsätze für die Werkzeuge erforderlich. Sowohl die Verwendung von unterschiedlichen Werkzeugen als auch die Verwendung von unterschiedlichen Wechseleinsätzen erfordern hohe Rüstzeiten bei der Fertigung. Insbesondere bei der Herstellung von Außenspiegelanordnungen ohne elektrischem Beiklappantrieb sind die Spiegelglasträgerelemente im Bereich einer Gehäuseausnehmung, die bei der "elektrischen Varianten" für die Aufnahme des Beiklappantriebs dient, mit entsprechenden Versteifungsrippen ausgeführt. Die Fertigung dieses Spiegelglasträgerelementes in einem Spritzgießverfahren erfordert hohe Zykluszeiten.

Aufgabe der vorliegenden Erfindung ist es unter einem ersten Aspekt der Erfindung eine Außenspiegelanordnung für Kraftfahrzeuge in unterschiedlichen Ausführungsformen bereitzustellen, wobei die Herstellkosten und die Fertigungszeiten minimiert und wobei insbesondere die Teilevielfalt des Spiegelglasträgerelementes gering sein soll. Weiterhin wird unter einem zweiten Aspekt eine einfache und kostengünstige Montage der Einzelteile der Außenspiegelanordnung für alle Varianten erreicht. Unter einem weiteren Aspekt der Erfindung wird ein Rastadapter für eine Außenspiegelanordnung vorgeschlagen, wodurch die Anzahl der bereitzustellenden Varianten für die Spiegelglasträgerelemente reduziert werden kann.

Die Aufgabe unter einem ersten Aspekt wird durch die im Anspruch 1 angegebenen Merkmale gelöst.

Durch die im Anspruch 1 angegebenen Merkmale der Rückspiegelanordnung ist es möglich die Varianten für das Spiegelglasträgerelement zu reduzieren. Dies wird dadurch erreicht, dass sowohl für die Ausführung der Rückspiegelanordnung für die Fahrerseite links ohne einen elektrischen Beiklappantrieb als auch für die Ausführung mit elektrischem Beiklappantrieb das gleiche Spiegelglasträgerelement verwendet werden kann. Das Spiegelglasträgerelement weist eine Gehäuseausnehmung und Befestigungsstellen für den Beiklappantrieb auf. Der erfindungsgemäße Rastadapter ist derart ausgebildet, dass er in die Gehäuseausnehmung eingesetzt werden kann und entsprechend dem Spiegelglasträgerelement korrespondierende Befestigungsstellen aufweist. Des Weiteren ist der Rastadapter mit Rastelementen versehen, die im eingebauten Zustand in korrespondierende spiegelfußseitige Raststellen eingreifen. Diese Rastelemente sind bei einer "elektrischen" Ausführungsform auf einer dem Beiklappantrieb zugeordneten Rastscheibe vorgesehen.

Die Aufgabe unter den weiteren Aspekten wird durch den Anspruch 5 bzw. 9 gelöst.

Durch die Ausbildung des erfindungsgemäßen Rastadapters können die Varianten der Glasträgerplatten minimiert und somit die erforderlichen Werkzeuge bzw. Wechseleinsätze reduziert werden. Hierdurch wird der Fertigungsprozess erheblich vereinfacht und die Rüstzeiten werden gesenkt. Weiterhin ist es möglich unterschiedliche Materialien für das Spiegelglasträgerelement und den Rastadapter zu verwenden. Dies hat den Vorteil, dass der Rastadapter der die Rastflächen aufweist aus einem Material gewählt werden kann, welches weniger verschleißanfällig ist. Das Spiegelglasträgerelement selbst unterliegt im Wesentlichen keinen Verschleiß und kann aus einem anderen Material hergestellt werden.

Weitere vorteilhafte Ausgestaltungen und Weiterbildungen der erfindungsgemäßen Rückspiegelanordnung ergeben sich aus den Unteransprüchen.

Bevorzugte Ausführungsformen der Rückspiegelanordnung für ein Kraftfahrzeug werden nachfolgend beispielshalber beschrieben, wobei veranschaulichend auf die beigefügten Zeichnungen Bezug genommen wird.

Es zeigen:
- Fig. 1a: eine perspektivische Ansicht der Ausführung eines Spiegelglasträgerelementes für den Einsatz in einer Außenspiegelanordnung ohne elektrischem Beiklappantrieb nach dem Stand der Technik,
- Fig. 1b: eine Ansicht eines Ausschnitts des Spiegelglasträgerelementes gemäß Figur 1,
- Fig. 2a: eine Explosionsdarstellung eines Spiegelglasträgerelementes und eines Rastadapters mit Befestigungsmitteln nach einem Ausführungsbeispiel der vorliegenden Erfindung,
- Fig. 2b: eine Ansicht eines Ausschnitts des Spiegelglasträgerelementes gemäß Figur 2a,
- Fig. 2c: eine Ansicht des Rastadapters gemäß Figur 2a auf die zum Spiegelfuß weisende Seite des Rastadapters,
- Fig. 2d: einen Querschnitt durch den Rastadapter gemäß der Figur 2a; und
- Fig. 3: eine perspektivische Darstellung eines Spiegelfußes der Außenspiegelanordnung.

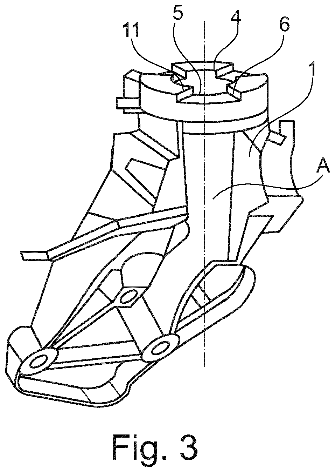

Eine Außenspiegelanordnung umfasst üblicherweise einen Spiegelfuß 1, ein Spiegelglasträgerelement 2 als Teil eines Spiegelkopfes sowie eine zwischen Spiegelfuß 1 und Spiegelglasträgerelement 2 ausgebildete Gelenkverbindung. Der Spiegelfuß 1 dient dabei zur Anbindung der Außenspiegelanordnung an der Fahrzeugkarosserie an der Fahrer- bzw. Beifahreraußenseite des Kraftfahrzeugs. Das Spiegelglasträgerelement 2 ist im montierten Zustand der Außenspiegelanordnung in einer Gehäusehalbschale des Spiegelkopfes des Außenspiegels aufgenommen und hält die Glasbaugruppe. Das Spiegelglasträgerelement 2 ist über die Gelenkverbindung um eine Gelenkachse A verschwenkbar an dem Spiegelfuß 1 angeordnet. Die Gelenkverbindung wird hierbei über einen an dem Spiegelfuß 1 angeordneten Lagerzapfen, der in einer spiegelkopfseitigen Lagerbuchse drehbar gelagert ist, gebildet. Der Spiegelfuß 1 ist in der Figur 3 in einer perspektivischen Ansicht ohne den Lagerzapfen gezeigt. Der Lagerzapfen wird bei der Montage in die Durchgangsbohrung 11 eingebracht und drehfest fixiert. Es sind auch Ausführungsformen möglich, bei denen der Lagerzapfen mit dem Spiegelfuß 1 einstückig ausgebildet sind. Wie es weiterhin aus der Darstellung der Figur 3 ersichtlich ist, weist der Spiegelfuß 1 an seinem oberen Endbereich einen ringscheibenförmigen Rastbereich mit Rastelementen 4 auf. Gleichmäßig verteilt über den Umfang der Stirnseite des Rastbereichs sind die Rastelemente 4 vorgesehen, die als axial nach oben stehende Kreissegmente ausgeführt sind. In einem Winkel von 120 Grad sind die Rastelemente 4 angeordnet, zwischen denen kreissegmentförmige Rastvertiefungen 5 ausgebildet sind. Zwischen den Rastelementen 4 und den Rastvertiefungen 5 sind schräg verlaufende Gleitflächen 6 vorgesehen. Diese Ausführung des Rastbereichs ist dem Fachmann bereits bekannt und wird daher nicht näher erläutert.

Die spiegelkopfseitige Lagerbuchse umfasst einen hülsenförmigen Lagerabschnitt, der an dem Spiegelglasträgerelement 2 angeformt ist. Derartige Gelenkverbindungen sind dem Durchschnittsfachmann in einer Vielzahl von Ausführungsvarianten bekannt und werden an dieser Stelle nicht näher erläutert.

Wie eingangs bereits beschrieben, ist der das Spiegelglasträgerelement 2 umfassende Spiegelkopf unter Auslösung einer Abklappeinrichtung schwenkbar um die Gelenkachse A an dem Spiegelfuß 1 gehalten. Dies ermöglicht eine manuelle Verschwenkung des Spiegelkopfes aus einer Betriebsstellung in eine erste Anklappstellung (der Spiegelkopf wird in Fahrtrichtung geschwenkt) und umgekehrt und in eine zweite Anklappstellung (der Spiegelkopf wird entgegen der Fahrtrichtung des Kraftfahrzeugs geschwenkt).

Die Abklappeinrichtung wird über spiegelfußseitige Rastelemente 4 und Rastvertiefungen 5, die in gegenüberliegende spiegelkopfseitige Rastelemente 7 und Rastvertiefungen 8 eingreifen gebildet. Die Rastelemente 4 bzw. 7 bilden mit den gegenüberliegenden Rastvertiefungen 8 bzw. 5 in Drehrichtung einen Formschluss, so dass der Spiegelkopf am Spiegelfuß in der Gebrauchsstellung lagegesichert ist. Die gelenkige Anbindung und Kopplung des Spiegelfußes am Spiegelkopf über die Abklappeinrichtung ermöglicht wie eingangsseitig bereits beschrieben ein Abklappen des Spiegelgehäuses bei Überschreiten einer bestimmten auf den Spiegelkopf einwirkenden Kraft sowohl in Fahrtrichtung als auch entgegen der Fahrtrichtung. Bei Ausüben eines Schlages auf den Spiegelkopf (bei Außenspiegelanordnungen mit Beiklappantrieb bei nicht aktiviertem Motor), wird ein axiales Anheben der spiegelkopfseitigen Rastscheibe 10 gegen die Wirkung einer Druckfeder bis zur Befreiung der Rastelemente 7 der Rastscheibe aus dem Eingriff mit den Rastvertiefungen 5 des Spiegelfußes bewirkt, wodurch der Spiegelkopf dem Schlag durch Einklappen ausweichen kann. Dieses Prinzip ist ebenfalls dem Fachmann in einer Vielzahl von Ausführungsformen bekannt und wird an dieser Stelle nicht näher beschrieben.

Wie in der Beschreibungseinleitung näher erläutert, werden Außenspiegelanordnungen mit und ohne einem sogenannten elektrischem Beiklappantrieb ausgeführt. Mittels des elektrischen Beiklappantriebs lässt sich die Außenspiegelanordnung von einem Fahrzeugnutzer durch entsprechende Ansteuerung in die zweite Anklappstellung die auch Parkstellung genannt wird und umgekehrt zurück in die Gebrauchsposition elektromotorisch verschwenken. Der Beiklappantrieb ist zur vereinfachten Montage an dem Spiegelglasträgerelement 2 als Baugruppenmodul ausgeführt und in entsprechend ausgeformten Gehäuseabschnitten des Spiegelträgerelementes 2 eingefügt. Das Baugruppenmodul "Beiklappantrieb" ist dem Fachmann aus dem Stand der Technik bekannt und zeichnerisch nicht dargestellt. Es umfasst einen Motor und ein Getriebe mit einem Abtriebselement. Das Abtriebselement greift in einen mit einer Verzahnung versehenen Abschnitt der spiegelfußseitigen Rastscheibe 10 oder einen mit der Rastscheibe 10 drehfest verbundenes anderes Bauteil ein. Die Rastscheibe 10 ist im Falle der Ausführungsvarianten der Außenspiegelanordnung mit elektrischem Beiklappantrieb dem Beiklappantrieb zugeordnet.

Bei einer Ausführungsvariante der Außenspiegelanordnung ohne elektrischem Beiklappantrieb ist lediglich ein Abklappen des Spiegelkopfes über eine auf den Spiegelkopf einwirkende Kraft in Fahrtrichtung oder entgegen der Fahrtrichtung bewirkbar. Das Baugruppenmodul "Beiklappantrieb" entfällt.

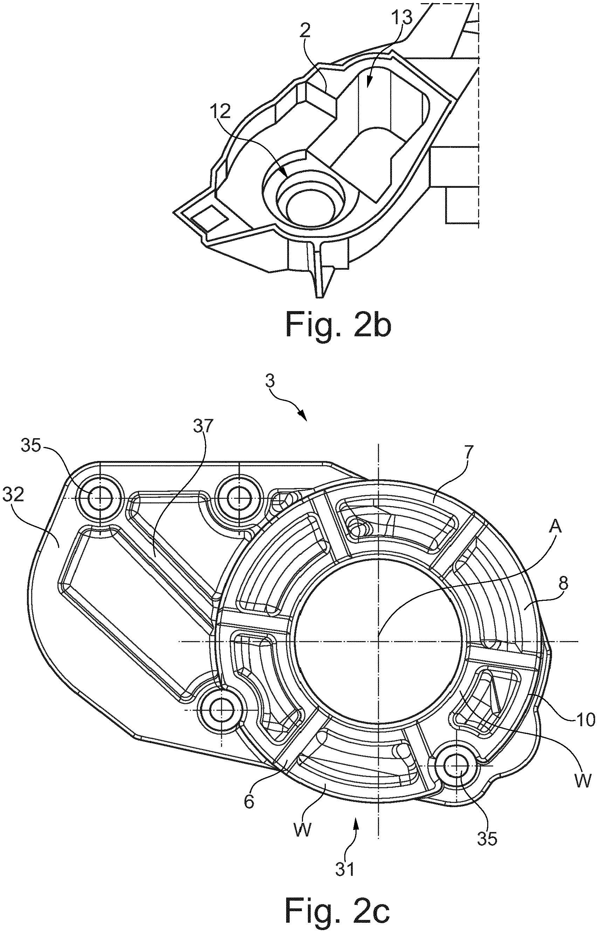

Wie bereits in der Beschreibungseinleitung erörtert, sind für die Ausführungsvarianten mit bzw. ohne Baugruppenmodul "Beiklappantrieb" unterschiedliche Spiegelglasträgerelemente 2, 20 erforderlich. Figur 2b zeigt einen Ausschnitt eines Spiegelglasträgerelementes 2 für eine Ausführungsvariante mit Beiklappantrieb (Variante A). Zur Aufnahme des Baugruppenmoduls sind in dem Spiegelglasträgerelement 2 erste und zweite Gehäuseausnehmungen 12, 13 und Befestigungsabschnitte 14 ausgebildet.

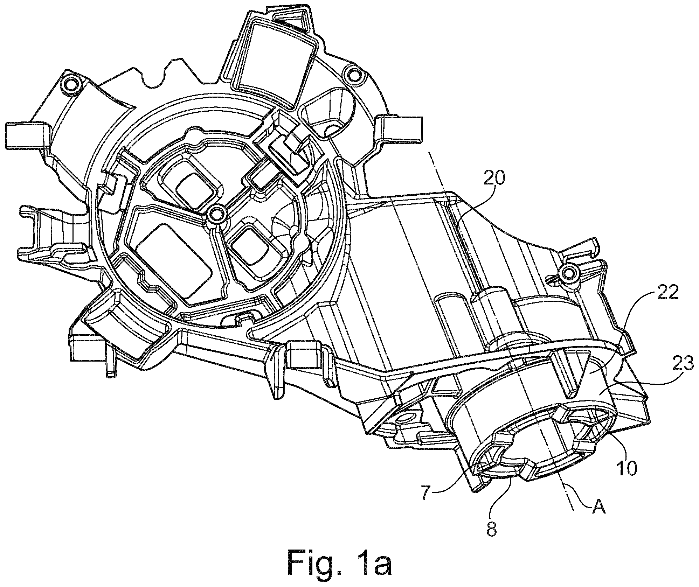

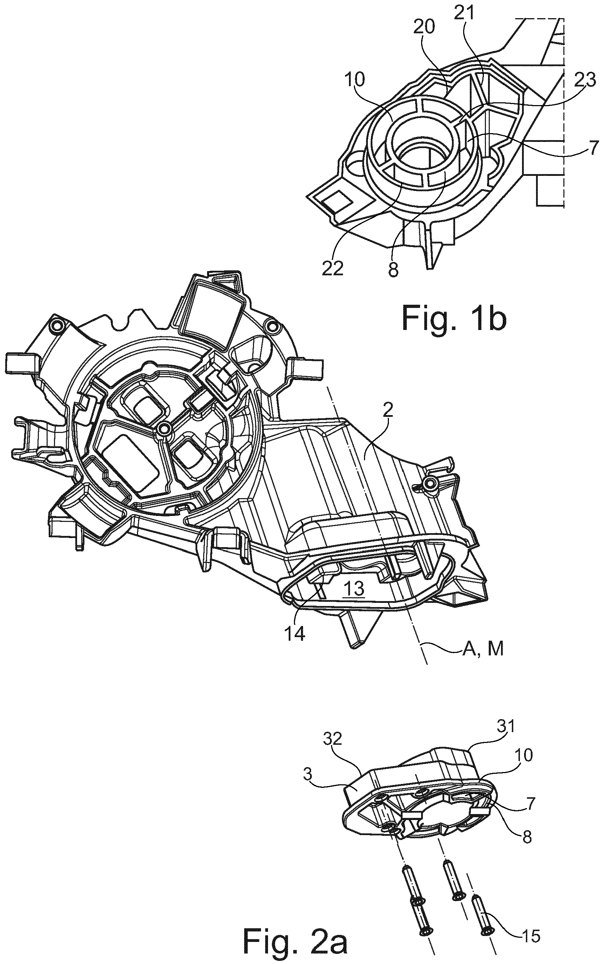

Figur 1b zeigt einen Ausschnitt eines Spiegelglasträgerelementes 20 für eine Ausführungsvariante ohne Beiklappantrieb (Variante B). Hierfür ist das Spiegelglasträgerelement in der Gehäuseausnehmung 13 des Spiegelglasträgerelementes, in welcher unter anderem die Motoreinheit aufgenommen ist, mit Versteifungsrippen 21 ausgeführt. Des Weiteren ist im Bereich der Gehäuseausnehmung 12 an einem zum Spiegelfuß weisenden Abschnitt eine zylindrische Hülse 22 mit angeformter Rastscheibe 23 und Rastelementen 7 bzw. Rastvertiefungen 8 ausgebildet. Wie nachstehend näher erläutert kann bei der erfindungsgemäßen Außenspiegelanordnung und der Ausführung ohne Beiklappantrieb auf das in Figur 1b gezeigten Spiegelglasträgerelements 20 verzichtet werden.

Gemäß der vorliegenden Erfindung umfasst die Außenspiegelanordnung bei der Varianten B das Spiegelglasträgerelement 2 der Varianten A sowie einen Rastadapter 3. Der Rastadapter 3 wird, wie es aus der Explosionsdarstellung der Figur 2a gezeigt ist, in die im Spiegelglasträgerelement 2 ausgebildeten Gehäuseausnehmungen 12, 13 eingefügt und mittels Befestigungselementen 15 an den Befestigungsabschnitten 14 des Spiegelglasträgerelementes 2 befestigt.

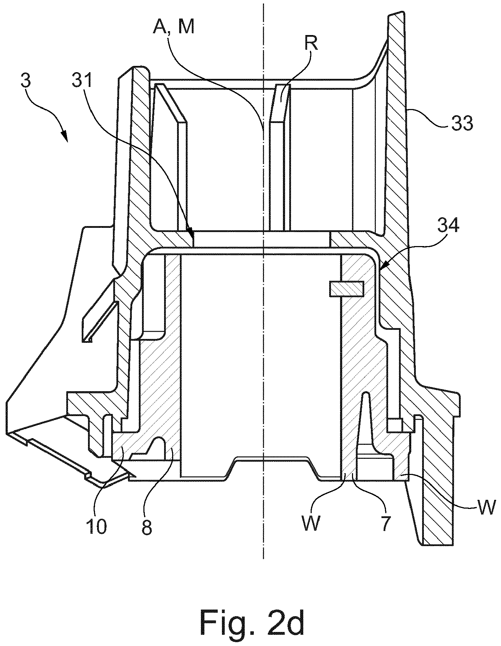

Der Rastadapter 3 ist in den Figuren 2a, 2c, 2d abgebildet und umfasst im Wesentlichen einen hohlzylindrischen ersten Grundkörper 31 mit einer Mittelachse M, sowie einen an den Grundkörper 31 angeformtem radial sich erstreckendem zweiten Grundkörper 32 auf. Der Grundkörper 31 weist im Wesentlichen einen oberen ersten topfförmigen Abschnitt 33 sowie einen zweiten topfförmigen Abschnitt 34 auf. Der erste topfförmige Abschnitt weist über seine innere Umfangsfläche verteilt radiale sich erstreckende Rippen R auf. Der zweite Grundkörper ist doppelwandig ausgeführt und weist an seinem nach unten weisenden ringförmigen Abschnitt die Rastscheibe 10 mit Rastelementen 7 und Rastvertiefungen 8 auf. Die bereits zuvor beschriebenen Rastelemente 7 und Rastvertiefungen 8 sind taschenförmig ausgebildet, wobei die Kreissegmente von einer umlaufenden Wandung W begrenzt sind. Zwischen den Rastelementen 7 und den Vertiefungen 8 sind schräg verlaufende Gleitflächen 6 ausgebildet. Dies erleichtert ein Ausrasten bzw. wieder Einrasten der korrespondierenden Rastelemente 4 bzw. Rastvertiefungen 5.

Der zweite Grundkörper 32 ist ebenfalls topfförmig ausgeführt und weist eine Versteifungsrippe 37 auf. Randseitig sind in den Rastadapter 3 Bohrungen 35 eingebracht, die zur Fixierung an dem Spiegelglasträgerelement 2 dienen. Bei der Montage wird der Rastadapter 3 mit dem ersten Grundkörper 31 in die Gehäuseausnehmung 12 eingefügt, und der zweite Grundkörper 32 wird in die Gehäuseausnehmung 13 eingefügt. Der zweite Grundkörper 32 ist dabei mit seiner Außenkontur der Innenkontur der Gehäuseausnehmung 13 angepasst. Der Rastadapter 3 ist des Weiteren derart ausgebildet und in das Spiegelglasträgerelement 2 eingefügt, dass die Drehachse A und die Mittelachse M koaxial zueinander verlaufen. Durch den hohlzylindrisch ausgeführten ersten Grundkörper 31 wird bei der Montage der Außenspiegelanordnung der Lagerzapfen des Spiegelfußes 1 geführt, um mit der Lagerhülse die Gelenkverbindung zu bilden.

## Patentansprüche

1. Außenspiegelanordnung für Kraftfahrzeuge mit einem an der Fahrzeugkarosserie festlegbaren Spiegelfuß (1) und einem Spiegelkopf, wobei der Spiegelkopf eine Gehäusehalbschale umfasst, und wobei in der Gehäusehalbschale ein eine Glasbaugruppe haltendes Spiegelglasträgerelement (2) aufgenommen ist, wobei das Spiegelglasträgerelement (2) mit zumindest einer Gehäuseausnehmung (12, 13) ausgebildet ist wobei zwischen Spiegelfuß (1) und Spiegelkopf eine Gelenkverbindung vorgesehen ist, die eine schwenkbare Lagerung zwischen Spiegelfuß (1) und Spiegelkopf um eine Gelenkachse (A) ermöglicht, wobei die Gelenkverbindung eine Abklappeinrichtung umfasst, die in einer ersten Variante mit einer mechanisch ausgebildeten Ablappfunktion und in einer zweiten Variante mit einer elektrisch ausgeführten Ablappfunktion ausgebildet ist, wobei die Abklappeinrichtung eine spiegelfußseitige Rastscheibe mit Rastelementen (4, 5) und eine spiegelkopfseitige Rastscheibe (10) mit Rastelementen (7, 8) aufweist, die in der Gebrauchslage der Außenspiegelanordnung derart ineinander greifen, dass eine formschlüssige und somit drehfeste Verbindung zwischen Spiegelfuß (1) und Spiegelkopf gebildet wird, und wobei durch Schlag auf den Spiegelkopf ein Verschwenken des Spiegelkopfes unter Auslösung der Abklappeinrichtung ermöglicht wird, wobei bei der ersten Variante die Außenspiegelanordnung einen Rastadapter (3) umfasst, der zumindest einen Grundkörper (31, 32) aufweist, der an die Gehäuseausnehmung (12, 13) angepasst und dort eingefügt ist, und wobei die spiegelkopfseitige Rastscheibe (10) an dem Rastadapter (3) ausgebildet ist, und wobei bei der zweiten Variante die Außenspiegelanordnung ein Baugruppenmoduls eines elektrischen Beiklappantriebs umfasst, und wobei das Baugruppenmodul in die Gehäuseausnehmung (12, 13) eingefügt ist, und wobei die Rastscheibe (10) dem Baugruppenmodul zugeordnet ist.

2. Außenspiegelanordnung für Kraftfahrzeuge nach Anspruch 1, **dadurch gekennzeichnet, dass** das Spiegelglasträgerelement (2) eine erste Gehäuseausnehmung (12) und eine zweite Gehäuseausnehmung (13) aufweist und der Rastadapter (3) einen ersten hohlzylindrischen Grundkörper (31) und einen zweiten Grundkörper (32) aufweist, wobei der Rastadapter (3) mit seinem ersten hohlzylindrischen Grundkörper (31) in die erste Gehäuseausnehmung (12) und der zweite Grundkörper (32) in die zweite Gehäuseausnehmung (13) derart eingefügt ist, dass die Mittelachse M des ersten hohlzylindrischen Grundkörpers (31) koaxial zur Gelenkachse (A) verläuft.

3. Außenspiegelanordnung für Kraftfahrzeuge nach Anspruch 1 oder 2, wobei an dem Spiegelglasträgerelement (2) und dem Rastadapter (3) Befestigungsabschnitte (14) bzw. (35) ausgebildet sind, und der Rastadapter (3) mittels Befestigungselementen (15) und den Befestigungsabschnitten (35) an den Befestigungsabschnitten (14) festlegbar ist.

4. Außenspiegelanordnung für Kraftfahrzeuge nach einem der Ansprüche 1 bis 3, wobei das Spiegelglasträgerelement (2) aus einem ersten Material und der Rastadapter (3) aus einem zweiten verschleißfesten Material hergestellt sind.

5. Rastadapter (3) zur Verwendung in einem Außenrückspiegel in einer ersten Variante mit mechanisch ausgeführter Abklappfunktion nach den vorangehenden Ansprüchen, **dadurch gekennzeichnet, dass** der Rastadapter (3) als Spritzgussteil hergestellt ist und zumindest einen Grundkörper (31, 32) aufweist, wobei der Grundkörper derart ausgestaltet ist, dass der Grundkörper (31, 32) anstelle des Baugruppenmoduls in die Gehäuseausnehmung (12, 13) eingesetzt werden kann, und dass der Rastadapter (3) eine Rastscheibe (10) aufweist.

6. Rastadapter (3) nach Anspruch 5, **dadurch gekennzeichnet, dass** der Rastadapter (3) einen ersten hohlzylindrischen Grundkörper (31) und einen zweiten Grundkörper (32) aufweist, wobei der erste hohlzylindrische Grundkörper (31) einen oberen ersten topfförmigen Abschnitt (33) sowie einen zweiten unteren topfförmigen Abschnitt (34) aufweist, und wobei der zweite topfförmige Abschnitt (34) doppelwandig ausgeführt ist und an seinem nach unten weisenden ringförmigen Abschnitt die Rastscheibe (10) mit Rastelementen (7) und Rastvertiefungen (8) aufweist.

7. Rastadapter (3) nach Anspruch 5 oder 6, **dadurch gekennzeichnet, dass** die Rastelemente (7) als axial nach außen stehende Kreissegmente ausgeführt sind, und diese in einem Winkelabstand von 120 Grad angeordnet sind, und wobei zwischen den Rastelementen (7) kreissegmentförmige Rastvertiefungen (8) ausgebildet sind, und wobei zwischen den Rastelementen (7) und den Rastvertiefungen (8) schräg verlaufende Gleitflächen (6) vorgesehen sind.

8. Rastadapter (3) nach Anspruch 7, **dadurch gekennzeichnet, dass** die Rastelemente (7) und die Rastvertiefungen (8) taschenförmig ausgeformt sind und von umlaufenden Wandungen (W) begrenzt werden.

9. Verfahren zur Montage einer Außenspiegelanordnung nach einem der Ansprüche 1 bis 4, **dadurch gekennzeichnet, dass** in das Spiegelglasträgerelement (2) in einem Montageschritt ein Rastadapter nach Anspruch 5 eingesetzt wird, wobei in einem weiteren Montageschritt der Spiegelfuß (1) mit Lagerzapfen und das Spiegelglasträgerelement (2) derart zusammengefügt werden, dass der Lagerzapfen eine Durchgangsbohrung des Rastadapters (3) durchdringt und eine Lagerung des Lagerzapfens in einer spiegelkopfseitigen Lagerhülse erreicht wird und wobei weiterhin das Spiegelglasträgerelement (2) derart auf dem Spiegelfuß (1) montiert wird, dass die Rastscheibe (10) des Rastadapters (3) in den Rastbereich des Spiegelfußes eingreift.
